# EUROPEAN PATENT SPECIFICATION

(11) **EP 2 712 967 B1**
(45) Date of publication and mention of the grant of the patent: **16.01.2019**
(21) Application number: 13185865.6
(22) Date of filing: 25.09.2013
(51) Int. Cl.: E02F 9/00, E02F 9/22, E02F 9/26, G01B 21/22

(54) **Angle detection device of construction machine**
Winkelerkennungsvorrichtung einer Baumaschine
Dispositif de détection d'angle de machine de construction

(30) Priority: 26.09.2012 JP 2012212219
(43) Date of publication of application: 02.04.2014
(73) Proprietor: Kobelco Construction Machinery Co., Ltd., Hiroshima 731-5161 (JP)
(72) Inventor: Hiragakiuchi, Atoshi, Hiroshima-shi,, Hiroshima 731-5161 (JP); Nakatini, Mitsuo, Hiroshima-shi,, Hiroshima 731-5161 (JP)
(74) Representative: TBK

(56) References cited:
- JP-A- H08 239 866
- JP-A- 2005 256 356
- JP-A- 2006 168 851
- JP-A- 2012 031 641
- JP-U- H0 663 666

## Description

### BACKGROUND OF THE INVENTION

### 1. Field of the Invention

The present invention relates to an angle detection device for detecting the angle between two members that pivot relatively in a construction machine such as a hydraulic shovel.

### 2. Description of the Related Art

Conventionally, as disclosed in Japanese Patent Application Publication No. 2001-115499, for example, known is a construction machine according to the preamble of claim 1 and having an arm angle detection device which is disposed between a pair of supporting plates of an arm, and configured from an angle sensor and a link mechanism. The link mechanism is configured from an angle transmission plate which is mounted so as to pivot together with the pivoting of an arm cylinder relative to a tip of a rod of the arm cylinder, a lever which is fixed to a rotating shaft part of the angle sensor, and a connecting plate which transmits, to the lever, the pivoting of the arm cylinder transmitted by the angle transmission plate. The angle transmission plate includes a main body portion sandwiched between a boss part at the tip of the rod of the arm cylinder and one of the supporting plates, a tongue-shaped protrusion which protrudes toward the angle sensor side, and a bent part which is bent at a right angle to the rod side of the arm cylinder, and the rod is sandwiched between the two arm parts of the bent part. The boss part of the tip of the rod of the arm cylinder and the pair of supporting plates of the arm are connected via a pin. Moreover, the pair of supporting plates are each provided with an internal boss which protrudes from the supporting plate towards the other supporting plate.

Nevertheless, with the arm angle detection device of the construction machine disclosed in the foregoing publication, the main body portion of the angle transmission plate has a hole with an inner diameter which matches the outer diameter of the pin used to connect the boss part and the pair of supporting plates, and is sandwiched between an inner end face of one internal boss in an axial direction of the pin and a corresponding outer end face of the boss part of the rod of the arm cylinder, the one internal boss being thinner of the respective internal bosses provided to the respective supporting plates. Thus, when an arm angle detection device is not provided, it is necessary to provide a shim having the same thickness as the main body portion in order to fill the gap between the inner end face of the one internal boss and the corresponding outer end face of the boss part of the arm cylinder. In addition, since the thickness of the one internal boss is thin, the contact area of the outer peripheral face of the pin relative to the inner peripheral face of the hole of the supporting plate and the inner peripheral face of the hole of the internal boss decreases and, consequently, the contact pressure applied to the outer peripheral face of the pin increases. Moreover, when the main body portion and the inner end face of the internal boss rub against each other and become worn and, the gap therebetween thereby increases, backlash will arise.

### SUMMARY OF THE INVENTION

An object of this invention is to provide an angle detection device of a construction machine capable of resolving the foregoing problems.

### According to the present invention, the above object is solved with a construction machine having the features of claim 1.

### BRIEF DESCRIPTION OF THE DRAWINGS

Fig. 1 is a front view of the portion near the connection of the arm and the arm cylinder for explaining the fixing structure of the fixing plate;
Fig. 2 is a side view of a hydraulic shovel comprising the angle detection device according to one embodiment of the present invention;
Fig. 3 is an enlarged side view of the angle detection device and the peripheral portion thereof in a state where the arm cylinder is most extended;
Fig. 4 is a diagram corresponding to Fig. 3 in a state where the arm cylinder is most contracted;
Fig. 5 is a plan view showing the angle detection device and the peripheral portion thereof in a state where the arm cylinder is most contracted;
Fig. 6 is a side view for explaining the detectable range of the angle detection device;
Fig. 7 is a side view of the fixing plate according to another embodiment; and
Fig. 8 is a diagram corresponding to Fig. 7 of the fixing plate according to yet another embodiment.

### DETAILED DESCRIPTION OF THE EMBODIMENTS

Embodiments of the present invention are now explained with reference to the appended drawings.

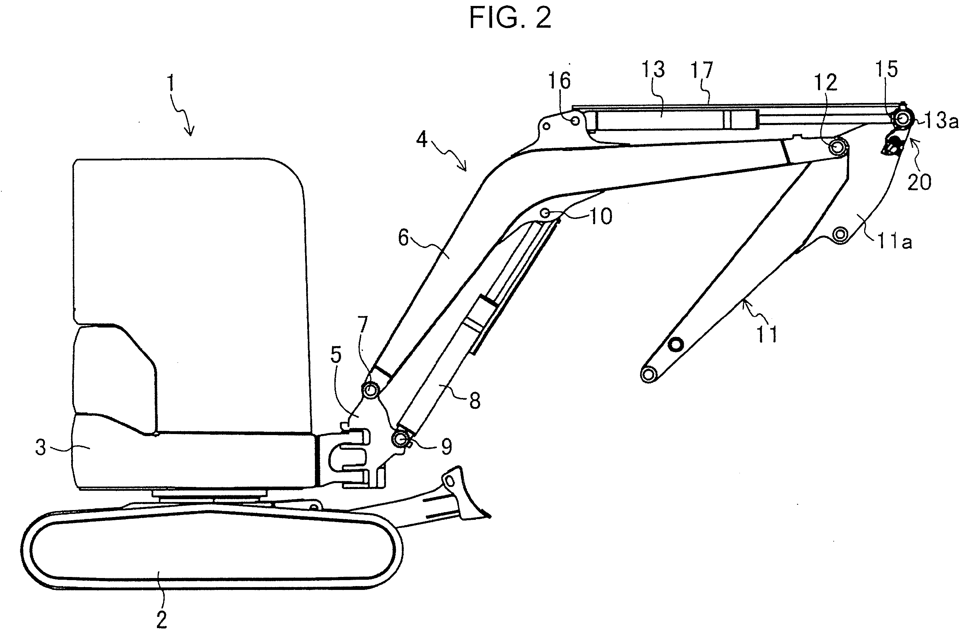

Fig. 2 is a side view of a hydraulic shovel 1 as a construction machine comprising the angle detection device according to one embodiment of the present invention. The hydraulic shovel 1 includes a propelling body 2, a slewing body 3 connected to the propelling body 2 in a slewable state, and an attachment 4 connected to the front part of the slewing body 3 in a raisable and lowerable state.

The attachment 4 comprises a swing bracket 5 connected to the front part of the slewing body 3, a boom 6 as a second member connected pivotably relative to an upper boom connecting shaft 7 provided to the swing bracket 5, and an arm 11 as a first member connected to the boom 6 so as to be pivotable by an arm connecting shaft 12 as a connecting shaft. Note that, in Fig. 2, for clearer visualization, illustration of members in front of the arm 11 has been omitted. The boom 6 is supported pivotably by a boom cylinder 8 as a pivot cylinder. The boom cylinder 8 includes a tube and a rod. The tube is connected so as to be pivotable relative to a lower cylinder support pin 9 provided to the swing bracket 5, and the rod is connected so as to be pivotable relative to an upper cylinder support pin 10 provided on the ventral side of the boom 6. In addition, a clevis 13a on one end side of the arm cylinder 13 is connected to the arm 11 by a first connecting pin 15, and the tube on the other end side of the arm cylinder 13 is connected to the portion on the dorsal side of the boom 6 by a second connecting pin 16. The arm 11 and the boom 6 are configured so that they can pivot relatively as a result of a telescopic motion of the arm cylinder 13. The boom connecting shaft 7, the lower cylinder support pin 9, the upper cylinder support pin 10, the arm connecting shaft 12, the first connecting pin 15 and the second connecting pin 16 are disposed to be parallel to each other. Note that, while not illustrated, a scoop or the like can be connected to the tip of the arm 11 in a state of being pivotable relative to the tip of the arm 11.

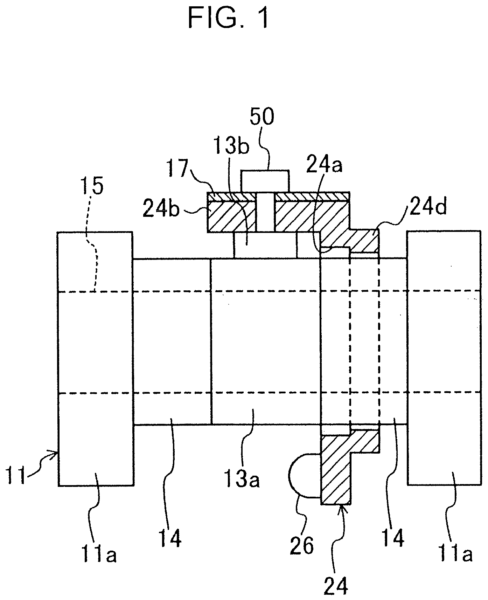

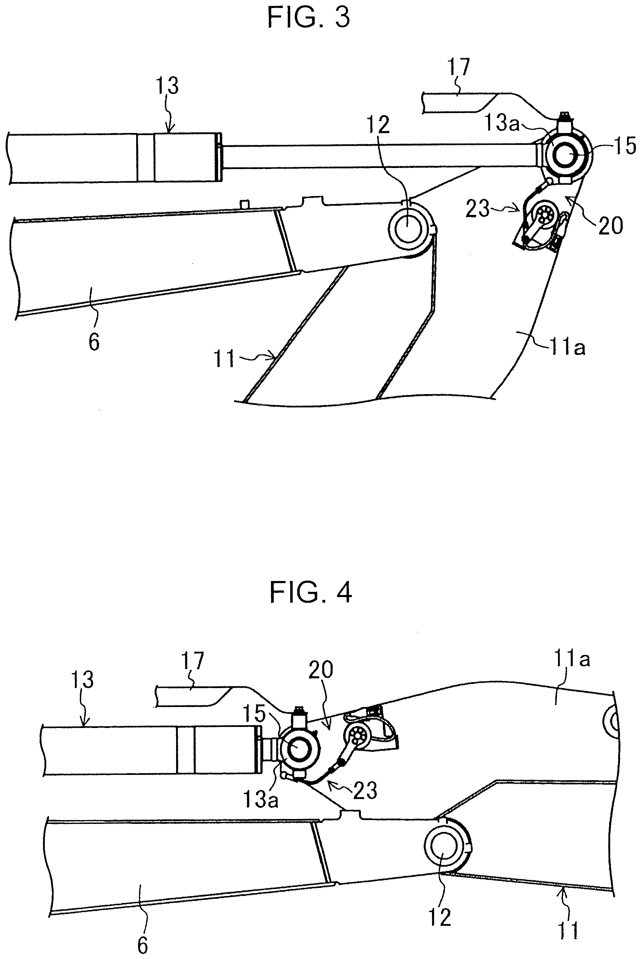

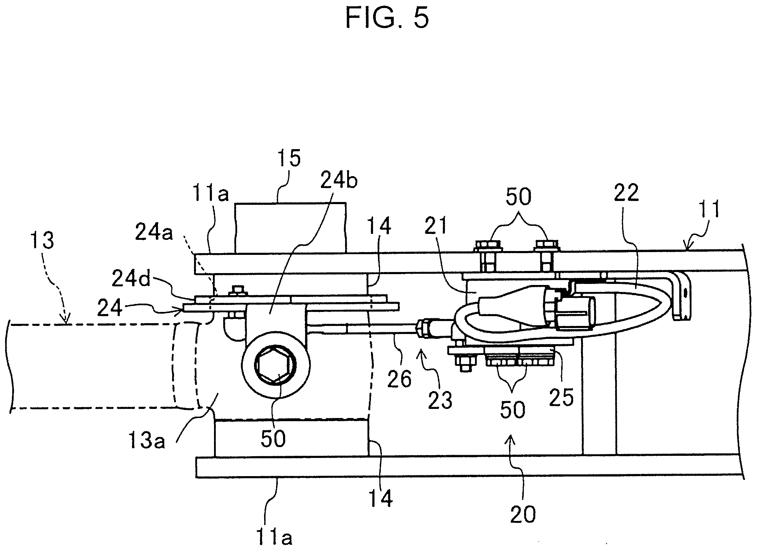

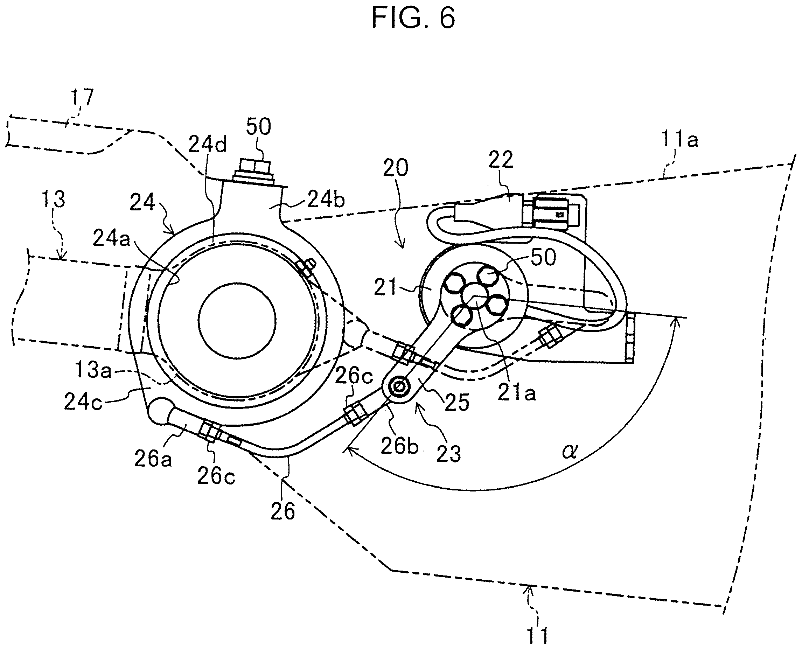

Fig. 1 is a front view of the portion near the connection of the arm 11 and the arm cylinder 13 for explaining the fixing structure of the fixing plate. Fig. 3 is an enlarged side view of the angle detection device and the peripheral portion thereof in a state where the arm cylinder 13 is most extended. Fig. 4 is a diagram corresponding to Fig. 3 in a state where the arm cylinder 13 is most contracted. Fig. 5 is a plan view showing the angle detection device and the peripheral portion thereof in a state where the arm cylinder 13 is most contracted. Fig. 6 is a side view for explaining the detectable range of the angle detection device.

As shown in the diagrams, the arm 11 comprises a pair of supporting plates 11a for supporting a clevis 13a of the arm cylinder 13. The pair of supporting plates 11a are disposed on the base end side of the box-shaped arm 11; that is, on the side of the arm connecting shaft 12. The pair of supporting plates 11a are disposed at a predetermined distance from each other in the axial direction of the first connecting pin 15 and disposed to be parallel to each other. The pair of supporting plates 11a are disposed in a manner of being separated on either side of the clevis 13a in the axial direction of the first connecting pin 15. The pair of supporting plates 11a are each provided with an internal boss 14. The internal boss 14 provided to the respective supporting plates 11a is protruding from the supporting plate 11a, to which the internal boss 14 is provided, toward the side of the other supporting plate 11a; that is, toward the side of the clevis 13a. Accordingly, one internal boss 14 provided to one supporting plate 11a is disposed on one side of the clevis 13a in the axial direction of the first connecting pin 15, and the other internal boss 14 provided to the other supporting plate 11a is disposed on the other side of the clevis 13a in the axial direction of the first connecting pin 15 and sandwiches the clevis 13a with the one internal boss 14. The clevis 13a, the respective internal bosses 14 and the respective supporting plates 11a respectively have an insertion hole. A common first connecting pin 15 is inserted through the insertion hole of the clevis 13a, the insertion hole of the respective internal bosses 14, and the insertion hole of the respective supporting plates 11a. The load applied to the first connecting pin 15 is supported at the inner peripheral face of these insertion holes.

In addition, one of the pair of supporting plates 11a is provided with an angle detection device 20 for detecting an angle between the arm 11 and the boom 6.

Specifically, for instance, an angle sensor 21 with a potentiometer built therein is fixed to the one supporting plate 11a by means of a bolt 50. A harness 22 extending from the angle sensor 21 extends along the attachment 4, and is connected to a harness not shown to be connected to a controller not shown in the slewing body 3.

The angle detection device 20 comprises a link mechanism 23 for transmitting, to the angle sensor 21, the change in the angle between the arm 11 and the boom 6. Specifically, the link mechanism 23 comprises a fixing plate 24 including a through-hole 24a. The through-hole 24a is an example of the opening of the present invention, and has an inner diameter that is greater than the outer diameter of the internal boss 14 through which the first connecting pin 15 was inserted. The size of the inner diameter of the through-hole 24a will suffice so as long as it is a size so that a gap, which does not impair the pivoting of the arm 11, can be maintained between the inner peripheral face of the through-hole 24a and the outer peripheral face of the internal boss 14 even if the inner peripheral face of the through-hole 24a comes into contact with the outer periphery of the internal boss 14.

In this embodiment, a stepped part 24d for maintaining the thickness is formed, for instance, by press molding, to the portion of the fixing plate 24 positioned around the internal boss 14; that is the portion around the through-hole 24a. Note that, in order to maintain the thickness of the portion of the fixing plate 24 positioned around the internal boss 14, in substitute for forming the stepped part 24d by press molding, it is also possible to form the fixing plate 24 by laminating and welding two plates having different outer diameters. Moreover, if it is not necessary to secure the thickness, the fixing plate 24 may also be formed by cutting out a portion corresponding to the through-hole 24a from a single steel plate.

The fixing plate 24 includes a mounting part 24b in which a part of the outer periphery of the fixing plate 24 is extended and bent. Meanwhile, the clevis 13a includes a tapped block 13b for mounting the cylinder guard 17 as an accessory. The tapped block 13b is a member having a tapped hole into which a bolt 50 is screwed. In addition, in a state where a predetermined gap is retained between the inner peripheral face of the through-hole 24a and the outer peripheral face of the internal boss 14 and the internal boss 14 is fitted into the through-hole 24a in a turnable manner, the mounting part 24b is fixed, together with the cylinder guard 17, to the tapped block 13b of the clevis 13a by means of a bolt 50 screwed into the tapped hole of the tapped block 13b. Thus, there is no need to newly provide, to the clevis 13a, a part to be fixed to be used only for fixing the fixing plate 24.

The angle sensor 21 includes a rotating shaft 21a. A plate-shaped lever 25 is fixed to the rotating shaft 21a by means of the bolt 50, and the lever 25 can rotate, together with the rotating shaft 21a, about the rotating shaft 21a. Meanwhile, one end 26a of a pole-shaped connecting member 26 is turnably connected to a protruding part 24c which is protruding from a part of the outer periphery of the fixing plate 24. The connecting member 26 is bent in a dogleg shape in a side view. The other end 26b of the connecting member 26 is turnably connected to the tip of the lever 25. The connecting member 26 is equipped with an adjustment mechanism for finely adjusting the length of the connecting member 26 by turning a nut 26c. As a result of comprising this adjustment mechanism, it is advantageous in that the connecting member 26 can be more easily mounted on the protruding part 24c and the tip of the lever 25.

In this embodiment, the angle sensor 21 is configured so that it can detect changes in the angle of the lever 25 from the position of the lever 25 in the state shown with the solid line in Fig. 6 in which the arm cylinder 13 is extended and the arm 11 is in the most lowered state, to the position of the lever 25 in the state shown with the two-dot chain line in Fig. 6 in which the arm cylinder 13 is contracted and the arm 11 is in the most raised state. For example, the angle sensor 21 is configured so that the maximum detection angle range α is substantially 120°. The angle sensor 21 may also perform the detection by setting the angle of the lever 25 in the intermediate state between state where the arm 11 is in the most lowered state and state where the arm 11 is in the most raised position as 0°, setting the angle of the lever 25 in the state where the arm 11 is in the most lowered state as -α/2, and setting the angle of the lever 25 in the state where the arm 11 is in the most raised state as +α/2.

The operation of the angle detection device 20 according to this embodiment is now explained.

In the state shown with the solid lines in Fig. 2, Fig. 3 and Fig. 6 in which the arm cylinder 13 is in the most extended state and the arm 11 is in the most lowered state, for instance, the angle sensor 21 detects an angle of -α/2.

From this state, when the arm cylinder 13 is contracted, the arm 11 pivots relative to the fixing plate 24 fixed to the clevis 13a. Consequently, pursuant to this motion, the lever 25 connected to the connecting member 26 pivots, and the angle sensor 21 detects the increase in the angle of the lever 25.

When the arm cylinder 13 is further contracted, the arm 11 rises, and the detection angle by the angle sensor 21 gradually increases. The angle sensor 21 can detect up to +α/2.

Here, even if the inner peripheral face of the through-hole 24a of the fixing plate 24 comes into contact with the outer peripheral face of the internal boss 14 while the arm 11 is pivoting, and either the inner peripheral part of the through-hole 24a or the outer peripheral of the internal boss 14 becomes worn down, since no adverse effect is exerted on the connection of the arm 11 and the arm cylinder 13, it is possible to prevent the infliction of an adverse effect, such as wobbling, on the motion of the arm 11 and the arm cylinder 13.

Moreover, since the inner diameter of the through-hole 24a of the fixing plate 24 is larger than the outer diameter of the internal boss 14 and the internal boss 14 is fitted into the through-hole 24a in a turnable manner, there is no need to insert the fixing plate 24 between both outer end faces of the clevis 13a in the axial direction of the first connecting pin 15 and the corresponding inner end face of the internal boss 14. Thus, it is possible to prevent the contact area of the outer peripheral face of the first connecting pin 15 relative to the inner peripheral face of the through-hole of the clevis 13a, the inner peripheral face of the through-hole of the respective supporting plates 11a, and the inner peripheral face of the through-hole of the respective internal bosses 14 from decreasing by the amount of the thickness of the fixing plate 24, and it is possible to prevent the contact pressure that is applied to the outer peripheral face of the first connecting pin 15 from increasing. Moreover, upon sharing the arm 11 between the attachment of a construction machine comprising the angle detection device 20 of this embodiment and the attachment of a construction machine of a configuration that is not provided with the angle detection device 20, including the fixing plate 24, of this embodiment, since there is no need to insert a shim having the same thickness as the fixing plate 24 in the attachment of a construction machine of a configuration that is not provided with the angle detection device 20 between one outer end face of the clevis 13a and the corresponding inner end face of the internal boss 14, there is an advantage from the perspective of sharing.

Accordingly, with the angle detection device 20 according to this embodiment, since the through-hole 24a having an inner diameter that is greater than the outer diameter of the internal boss 14 is provided to the fixing plate 24, and the fixing plate 24 is fixed to the clevis 13a in a state where the internal boss 14 is fitted into the through-hole 24a in a turnable manner, there is no need to change the shape of the internal boss 14, the contact pressure that is applied to the outer peripheral face of the first connecting pin 15 does not increase, the installation of a shim is no longer required, and the change in the angle between the arm 11 and the boom 6 can be detected with high accuracy.

Moreover, since the fixing plate 24 is tightened, together with the cylinder guard 17, to the tapped block 13b, the number of components is not increased and the structure can be simplified.

### (Other embodiments)

The present invention may also adopt the following configurations in the foregoing embodiments.

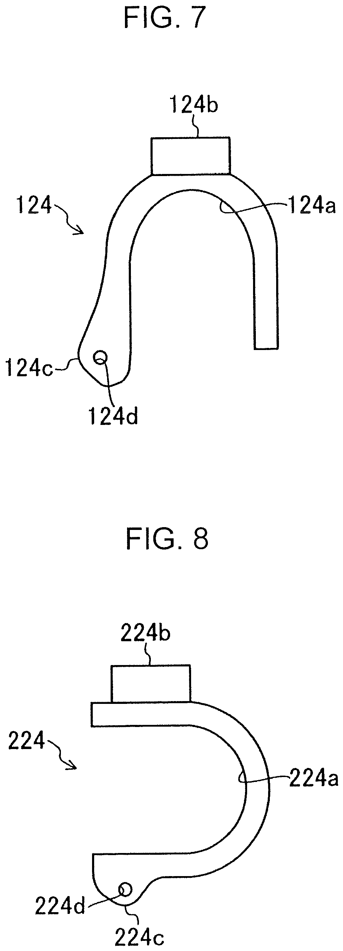

Fig. 7 is a side view of a fixing plate 124 according to another embodiment. The fixing plate 124 includes an opening 124a which penetrates the fixing plate 124 in the thickness direction. The lower part of the periphery of the opening 124a of the fixing plate 124 is opened at a size that is greater than the outer diameter of the internal boss 14, and as a whole is formed in a substantial U-shape. Specifically, the lower part of the periphery of the opening 124a of the fixing plate 124 is provided with an opened area communicated with the opening 124a and having a width that is greater than the outer diameter of the internal boss 14. In other words, the periphery of the opening 124a of the fixing plate 124 has one lower end, and the other lower end which is separated from the one lower end at a distance that is greater than the outer diameter of the internal boss 14, the opened area is formed between the one lower end and the other lower end. Moreover, a hole 124d is provided to one lower end protruding part 124c of the fixing plate 124, and one end 26a of the connecting member 26 is connected to the hole 124d.

Fig. 8 is a diagram corresponding to Fig. 7 of a fixing plate 224 according to yet another embodiment. The fixing plate 224 has an opening 224a which penetrates the fixing plate 224 in the thickness direction. The left-side part in Fig. 8 of the periphery of the opening 224a of the fixing plate 224 is opened at a size that is greater than the outer diameter of the internal boss 14, and as a whole is formed in a substantial U-shape. Specifically, the left-side part in Fig. 8 of the periphery of the opening 224a of the fixing plate 224 is provided with an opened area communicated with the opening 224a and having a width that is greater than the outer diameter of the internal boss 14. In other words, the periphery of the opening 224a of the fixing plate 224 has one left end in Fig. 8, and the other left end which is separated from the one left end at a distance that is greater than the outer diameter of the internal boss 14, the opened area is formed between the one left end and the other left end. Moreover, a hole 224d is provided to the protruding part 224c on the left end of Fig. 8 below the fixing plate 224, and the one end 26a of the connecting member 26 is connected to the hole 224d.

With the fixing plates 124, 224 shown in Fig. 7 and Fig. 8, the fixing plates 124, 224 can be fitted into the outer peripheral part of the internal boss 14 so that the internal boss 14 enters the openings 124a, 224a from the opened portion of the openings 124a, 224a. Thus, the fixing plates 124, 224 can be connected with the internal boss 14 and fixed to the clevis 13a without having to remove the first connecting pin 15. In other words, the fixing plates 124, 224 can be removed and attached in a state where the first connecting pin 15 is fitted into the through-hole of the clevis 13a, the through-hole of the respective supporting plates 11a and the through-hole of the respective internal bosses 14, and the workability is extremely favorable.

Moreover, in the foregoing embodiment, while the fixing plate 24 is tightened, together with the cylinder guard 17, to the tapped block 13b, it is also possible to tighten only the fixing plate 24 to the tapped block 13b, and the fixing plate 24 may also be tightened together with another accessory other than the cylinder guard 17.

Moreover, in the foregoing embodiment, while the first member is explained as the arm 11, the second member is explained as the boom 6, and the pivot cylinder is explained as the arm cylinder 13, the configuration is not limited thereto. For example, the first member may be the boom 6, the second member may be the swing bracket 5, and the pivot cylinder may be the boom cylinder 8. In this case, the angle detection device may detect the angle of the boom 6 that is formed relative to the slewing body 3.

Moreover, in the foregoing embodiment, while the construction machine is exemplified as the backhoe hydraulic shovel 1 including the swing bracket 5, the application is not limited thereto. For example, the construction machine may also be a machine that does not include the swing bracket 5. Moreover, the present invention can also be similarly applied to various types of construction machines such as a loading shovel or a clam shell including an attachment in which the first member is pivoted relative to the second member by the pivot cylinder.

Note that the foregoing embodiments are substantially illustrations of preferred examples, and are not intended to limit the use or scope of the present invention and the objects to which the present invention can be applied. Moreover, the technical features described in the respective embodiments can be combined with each other, and new technical features can be formed based on such combination.

As explained above, the present invention is useful as an angle detection device of a construction machine such as a hydraulic shovel.

### [Outline of embodiments]

The foregoing embodiments can be summarized as follows.

The angle detection device of a construction machine according to the foregoing embodiment is for use in a construction machine including a first member and a second member mutually connected via a connecting shaft and configured to be relatively pivotable about the connecting shaft, and a pivot cylinder which has one end connected to the first member via a first connecting pin and another end connected to the second member via a second connecting pin and which performs a telescopic motion so as to cause the second member to pivot relative to the first member, the construction machine performing operations by pivoting the first member relative to the second member, and being configured such that the first member includes a pair of supporting plates for supporting the one end of the pivot cylinder, one of the pair of supporting plates is provided with one internal boss disposed on one side relative to the one end of the pivot cylinder in an axial direction of the first connecting pin, another supporting plate of the pair of supporting plates is provided with another internal boss which is disposed on a side which is opposite to the one internal boss relative to the one end of the pivot cylinder in the axial direction of the first connecting pin and sandwiches the one end of the pivot cylinder with the one internal boss, and the first connecting pin is inserted through the one internal boss and the other internal boss, the angle detection device detecting an angle between the first member and the second member, and including an angle sensor fixed to the one supporting plate, and a link mechanism for transmitting, to the angle sensor, a change in the angle between the first member and the second member, wherein the link mechanism includes a fixing plate fixed to the one end of the pivot cylinder, a lever fixed to a rotating shaft of the angle sensor, and a connecting member having one end connected to the fixing plate in a turnable manner, and another end connected to the lever in a turnable manner, the fixing plate having an opening which is larger than an outer diameter of the one internal boss and to which the one internal boss is fitted in a turnable manner.

With the foregoing configuration, the first member pivots relative to the fixing plate which is fixed to one end of the pivot cylinder, as a result of the telescopic motion of the pivot cylinder. Subsequently, pursuant to the pivoting of the first member, the lever connected to the connecting member pivots, and the angle sensor thereby detects the change in the angle between the first member and the second member. Even if the inner face of the opening of the fixing plate comes into contact with the outer peripheral face of the internal boss during the pivoting of the first member and thereby either the inner face of the opening of the fixing plate or the outer peripheral face of the internal boss is worn down, there will be no adverse effect, such as wobbling, between the first member and the pivot cylinder. Since the opening of the fixing plate is larger than the outer diameter of the internal boss, there is no need to insert the fixing plate between the outer end face of one end of the pivot cylinder and the corresponding inner end face of the internal boss, and it is thereby possible to prevent the contact pressure applied to the outer peripheral face of the first connecting pin from increasing, and there is also no need to insert a shim between the outer end face of one end of the pivot cylinder and the corresponding inner end face of the internal boss in cases of not providing a fixing plate.

In the foregoing angle detection device of a construction machine, preferably, the one end of the pivot cylinder is provided with a tapped block to which an accessory is fixed, and the fixing plate is tightened, together with the accessory, to the tapped block.

With the foregoing configuration, since a fixing plate is tightened, together with an accessory, to a tapped block which is provided to one end of the pivot cylinder and to which the accessory such as a guard is fixed, there is no need to newly provide a part to be fixed only for fixing the fixing plate to one end of the pivot cylinder.

In the foregoing angle detection device of a construction machine, preferably, a part of a periphery of the opening of the fixing plate is opened at a size which is larger than the outer diameter of the one internal boss.

According to the foregoing configuration, the fixing plate can be mated to the outer peripheral part of the internal boss so that the internal boss enters the opening from the opened portion of the opening. Thus, without having to remove the first connecting pin, it is possible to combine the fixing plate with the internal boss and fix the fixing plate to one end of the pivot cylinder.

As explained above, in the foregoing embodiments, since an opening which is larger than the outer diameter of the internal boss is provided to the fixing plate, and the fixing plate is fixed to one end of the pivot cylinder in a state where the internal boss is fitted into the opening in a turnable manner, there is no need to change the shape of the internal boss, the contact pressure which is applied to the outer peripheral face of the first connecting pin does not increase, the installation of a shim is no longer required, and the change in the angle between the first member and the second member can be detected with high accuracy.

Moreover, in the foregoing embodiments, since the fixing plate is tightened, together with the accessory, to the tapped block, the number of components is not increased and the structure can be simplified.

Moreover, in the foregoing embodiments, since a part of the periphery of the opening of the fixing plate is opened at a size that is greater than the outer diameter of the internal boss, the fixing plate can be removed and attached without having to remove and attach the first connecting pin, and the workability is extremely favorable.

An angle detection device of a construction machine includes an angle sensor fixed to one of a pair of supporting plates of a first member of the construction machine, and a link mechanism for transmitting, to the angle sensor, a change in the angle between the first member and a second member of the construction machine; wherein the link mechanism includes a fixing plate fixed to one end of a pivot cylinder, a lever fixed to a rotating shaft of the angle sensor, and a connecting member having one end connected to the fixing plate in a turnable manner, and another end connected to the lever in a turnable manner, the fixing plate having an opening which is larger than an outer diameter of one internal boss provided to the one supporting plate and to which the one internal boss is fitted in a turnable manner.

## Claims

1. A construction machine (1) including a first member (11) and a second member (6) mutually connected via a connecting shaft (12) and configured to be relatively pivotable about the connecting shaft (12), and a pivot cylinder (13) which has one end connected to the first member (11) via a first connecting pin (15) and another end connected to the second member (6) via a second connecting pin (16) and which performs a telescopic motion so as to cause the second member (6) to pivot relative to the first member (11), the construction machine (1) performing operations by pivoting the first member (11) relative to the second member (6), and being configured such that the first member (11) includes a pair of supporting plates (11a) for supporting the one end of the pivot cylinder (13), one of the pair of supporting plates (11a) is provided with one internal boss (14) disposed on one side relative to the one end of the pivot cylinder (13) in an axial direction of the first connecting pin (15), another supporting plate of the pair of supporting plates (11a) is provided with another internal boss (14) which is disposed on a side which is opposite to the one internal boss (14) relative to the one end of the pivot cylinder (13) in the axial direction of the first connecting pin (15) and sandwiches the one end of the pivot cylinder (13) with the one internal boss (14), and the first connecting pin (15) is inserted through the one internal boss (14) and the other internal boss (14), the construction machine (1) further comprising
an angle detection device (20) adapted to detect an angle between the first member (11) and the second member (6), and comprising:
an angle sensor (21) fixed to the one supporting plate (11a); and
a link mechanism (23) for transmitting, to the angle sensor (21), a change in the angle between the first member (11) and the second member (6),
wherein the link mechanism (23) includes a fixing plate (24; 124; 224) fixed to the one end of the pivot cylinder (13), a lever (25) fixed to a rotating shaft (21a) of the angle sensor (21), and a connecting member (26) having one end connected to the fixing plate (24; 124; 224) in a turnable manner, and another end connected to the lever (25) in a turnable manner, **characterized in that**
the fixing plate (24; 124; 224) has an opening (24a; 124a; 224a) which is larger than an outer diameter of the one internal boss (14) and to which the one internal boss (14) is fitted in a turnable manner.

2. The construction machine (1) according to claim 1, wherein
the one end of the pivot cylinder (13) is provided with a tapped block (13b) to which an accessory (17) is fixed, and
the fixing plate (24) is tightened, together with the accessory (17), to the tapped block (13b).

3. The construction machine 1 according to claim 1 or 2, wherein
a part of a periphery of the opening (124a; 224a) of the fixing plate (124, 224) is opened at a size which is larger than the outer diameter of the one internal boss (14).

## Patentansprüche

1. Baumaschine (1), mit einem ersten Bauteil (11) und einem zweiten Bauteil (6), die über eine Verbindungswelle (12) gemeinsam verbunden sind und konfiguriert sind, um die Verbindungswelle (12) relativ drehbar zu sein, und einem Schwenkzylinder (13), welcher ein Ende hat, das über einen ersten Verbindungsbolzen (15) mit dem ersten Bauteil (11) verbunden ist, und ein anderes Ende, das über einen zweiten Verbindungsbolzen (16) mit dem zweiten Bauteil (6) verbunden ist, und welcher eine Ausfahrbewegung ausführt, um das zweite Bauteil (6) zu veranlassen, relativ zu dem ersten Bauteil (11) zu schwenken, wobei die Baumaschine (1) Arbeiten ausführt, indem das erste Bauteil (11) relativ zu dem zweiten Bauteil (6) geschwenkt wird, und so konfiguriert ist, dass das erste Bauteil (11) ein Paar Stützplatten (11a) zum Stützen des einen Endes des Schwenkzylinders (13) enthält, wobei eine von dem Paar Stützplatten (11a) mit einer innenliegenden Hülse (14) versehen ist, die bezüglich dem einen Ende des Schwenkzylinders (13) in einer Axialrichtung des ersten Verbindungsbolzens (15) auf einer Seite angeordnet ist, wobei die andere Stützplatte des Paars von Stützplatten (11a) mit einer anderen innenliegenden Hülse (14) versehen ist, welche auf einer Seite angeordnet ist, welche bezüglich dem einen Ende des Schwenkzylinders (13) in der Axialrichtung des ersten Verbindungsbolzens (15) gegenüber der einen innenliegenden Hülse (14) ist, und mit der einen innenliegenden Hülse (14) das eine Ende des Schwenkzylinders (13) dazwischen aufnimmt, und der erste Verbindungsbolzen (15) durch die eine innenliegende Hülse (14) und die andere innenliegende Hülse (14) eingeführt ist, wobei die Baumaschine (1) ferner
eine Winkelerfassungsvorrichtung (20) umfasst, die angepasst ist, einen Winkel zwischen dem ersten Bauteil (11) und dem zweiten Bauteil (6) zu erfassen, mit
einem Winkelsensor (21), der an der einen Stützplatte (11a) befestigt ist; und
einem Verbindungsmechanismus (23), um eine Änderung des Winkels zwischen dem ersten Bauteil (11) und dem zweiten Bauteil (6) an den Winkelsensor (21) zu übertragen,
wobei der Verbindungsmechanismus (23) eine Befestigungsplatte (24; 124; 224), die an dem einen Ende des Schwenkzylinders (13) befestigt ist, einen Hebel (25), der an einer Drehwelle (21a) des Winkelsensors (21) befestigt ist, und ein Verbindungsbauteil (26) aufweist, das ein Ende, das mit der Befestigungsplatte (24; 124; 224) auf eine drehbare Weise verbunden ist, und ein anderes Ende hat, das mit dem Hebel (25) auf eine drehbare Weise verbunden ist, **dadurch gekennzeichnet, dass**
die Befestigungsplatte (24; 124; 224) eine Öffnung (24a; 124a; 224a) hat, welche größer ist als ein Außendurchmesser der einen innenliegenden Hülse (14) und in welche die eine innenliegende Hülse (14) auf eine drehbare Weise eingepasst ist.

2. Baumaschine (1) nach Anspruch 1, wobei
das eine Ende des Schwenkzylinders (13) mit einem Gewindeblock (13b) versehen ist, an welchem ein Anbauteil (17) befestigt ist, und
die Befestigungsplatte (24) zusammen mit dem Anbauteil (17) an dem Gewindeblock (13b) festgezogen ist.

3. Baumaschine 1 nach Anspruch 1 oder 2, wobei
ein Teil eines Umfangs der Öffnung (124a; 224a) der Befestigungsplatte (124, 224) mit einer Größe geöffnet ist, welche größer ist als der Außendurchmesser der einen innenliegenden Hülse (14).

## Revendications

1. Machine de construction (1) comprenant un premier élément (11) et un second élément (6) mutuellement raccordés via un arbre de raccordement (12) et configurés pour pouvoir pivoter relativement autour de l'arbre de raccordement (12), et un cylindre de pivot (13) qui a une extrémité raccordée au premier élément (11) via une première broche de raccordement (15) et une autre extrémité raccordée au second élément (6) via une seconde broche de raccordement (16) et qui réalise un mouvement télescopique afin d'amener le second élément (6) à pivoter par rapport au premier élément (11), la machine de construction (1) réalisant des opérations en faisant pivoter le premier élément (11) par rapport au second élément (6), et étant configurée de sorte que le premier élément (11) comprend une paire de plaques de support (11a) pour supporter la une extrémité du cylindre de pivot (13), l'une de la paire de plaques de support (11a) est prévue avec un bossage interne (14) disposé sur un côté par rapport à la une extrémité du cylindre de pivot (13) dans une direction axiale de la première broche de raccordement (15), une autre plaque de support de la paire de plaques de support (11a) est prévue avec un autre bossage interne (14) qui est disposé sur un côté qui est opposé au un bossage interne (14) par rapport à la une extrémité du cylindre de pivot (13) dans la direction axiale de la première broche de raccordement (15) et prend en sandwich la une extrémité du cylindre de pivot (13) avec le un bossage interne (14), et la première broche de raccordement (15) est insérée à travers le un bossage interne (14) et l'autre bossage interne (14), la machine de construction (1) comprenant en outre :
un dispositif de détection d'angle (20) adapté pour détecter un angle entre le premier élément (11) et le second élément (6), et comprenant :
un capteur d'angle (21) fixé sur la une plaque de support (11a) ; et
un mécanisme de liaison (23) pour transmettre, au capteur d'angle (21), un changement d'angle entre le premier élément (11) et le second élément (6),
dans lequel le mécanisme de liaison (23) comprend une plaque de fixation (24 ; 124 ; 224) fixée sur la une extrémité du cylindre de pivot (13), un levier (25) fixé à un arbre de rotation (21a) du capteur d'angle (21), et un élément de raccordement (26) ayant une extrémité raccordée à la plaque de fixation (24 ; 124 ; 224) d'une manière rotative, et une autre extrémité raccordée au levier (25) d'une manière rotative, **caractérisée en ce que** :
la plaque de fixation (24 ; 124 ; 224) a une ouverture (24a ; 124a ; 224a) qui est supérieure à un diamètre externe du un bossage interne (14) et sur laquelle le un bossage interne (14) est monté d'une manière rotative.

2. Machine de construction (1) selon la revendication 1, dans laquelle :
la une extrémité du cylindre de pivot (13) est prévue avec un bloc taraudé (13b) sur lequel un accessoire (17) est fixé, et
la plaque de fixation (24) est serrée, conjointement avec l'accessoire (17), sur le bloc taraudé (13b).

3. Machine de construction (1) selon la revendication 1 ou 2, dans laquelle :
une partie d'une périphérie de l'ouverture (124a ; 224a) de la plaque de fixation (124, 224) est ouverte à une dimension qui est supérieure au diamètre externe du un bossage interne (14).
